# EUROPÄISCHE PATENTSCHRIFT

(11) **EP 0 558 982 B1**
(45) Veröffentlichungstag und Bekanntmachung des Hinweises auf die Patenterteilung: **08.10.1997**
(21) Anmeldenummer: 93102311.3
(22) Anmeldetag: 15.02.1993
(51) Int. Cl.: B23Q 1/25

(54) **Vorrichtung zur mehrseitigen Bearbeitung von Hohlprofilen**
Device for working upon an hollow profile along a plurality of his sides
Dispositif pour l'usinage des profilés creux le long plusieurs faces

(30) Priorität: 15.02.1992 DE 4204519
(43) Veröffentlichungstag der Anmeldung: 08.09.1993
(73) Patentinhaber: ROTOX GmbH B. EISENBACH, D-56858 Grenderich (DE)
(72) Erfinder: Eisenbach, Bernhard, W-6259 Brechen (DE)
(74) Vertreter: Katscher, Helmut, Dipl.-Ing.

(56) Entgegenhaltungen:
- EP-A- 0 463 453
- DE-A- 3 320 738
- JP-A-63 191 555
- US-A- 3 918 145
- PATENT ABSTRACTS OF JAPAN vol. 9, no. 7 (M-350) (1730) 12. Januar 1985 & JP-A-59 156 632 (TOYODA) 5. September 1984

## Beschreibung

Die Erfindung betrifft eine Vorrichtung zur mehrseitigen Bearbeitung von Hohlprofilen mittels einer an einem Maschinengestell mehrachsig programmgesteuert verfahrbaren Bearbeitungseinheit, mit einer im Maschinengestell gelagerten Aufspanneinrichtung für das zu bearbeitende Hohlprofil, wobei die Aufspanneinrichtung im Maschinengestell um eine parallel zur Längsachse des Hohlprofils verlaufende Schwenkachse um mindestens 180°schwenkbar gelagert und mit einem Schwenkantrieb versehen ist.

Die Herstellung von Bohrungen und profilierten Durchbrüchen an Hohlprofilen, beispielsweise zur Aufnahme von Schlössern und Beschlägen für Fenster- und Türrahmen, erfolgt üblicherweise entweder durch spanende Bearbeitung, nämlich Bohren und Fräsen, oder durch Plasmaschneiden. Die Fräsbearbeitung verursacht wegen der erforderlichen hohen Fräserdrehzahl erheblichen Lärm, der oftmals über der zulässigen Grenze liegt. Der Lärm ist umso stärker, je größer der verwendete Fräser ist. Außerdem werden wegen der hohen Fräserdrehzahl die Späne weit von der Maschine weggeschleudert.

Bei der bisher weit verbreiteten handbetätigten Kopiersteuerung derartiger Maschinen ist ein Abdecken zur Verminderung des Lärms und zur Vermeidung wegfliegender Späne kaum durchzuführen, weil die für die Steuerung der Maschine benötigten Handhebel zugänglich bleiben müssen. Diese Schwierigkeit könnte zwar dadurch überwunden werden, daß die Maschine mit einer Programmsteuerung versehen wird, beispielsweise einer NC- oder CNC-Steuerung. Da derartige Hohlprofile aber üblicherweise von mehreren Seiten her bearbeitet werden müssen, ist ein Umspannen zwischen einzelnen Bearbeitungsschritten erforderlich. Deshalb muß die Aufspanneinrichtung für das Hohlprofil zugänglich bleiben; die Maschine kann deshalb nicht geschlossen ausgeführt werden.

Hohlprofile aus Aluminium, Aluminiumlegierungen und/oder Kunststoff werden üblicherweise durch Fräsen bearbeitet. Beim Fräsen von Hohlprofilen aus Stahl tritt ein verhältnismäßig hoher Fräserverschleiß auf; deshalb erfolgt die Bearbeitung von Hohlprofilen aus Stahl zunehmend durch Plasmaschneiden. Da beim Plasmaschneiden schädliche Dämpfe entstehen, die abgesaugt werden müssen, und da ein erheblicher Funkenflug auftritt, wäre auch für das Plasmaschneiden eine geschlossene Bauart der Maschine wünschenswert. Hierbei stellt sich aber ebenfalls das Problem, daß das Werkstück zur Bearbeitung an mehreren Seiten umgespannt werden muß, weil das Plasmaschneiden nur mit senkrechter Anordnung des Plasmabrenners möglich ist; anderenfalls würde die Ausnehmung ungenau hergestellt oder das auf den Plasmabrenner zurückfließende flüssige Material würde den Schneidvorgang stören.

Somit ist sowohl für das Fräsen mit hohen Drehzahlen, insbesondere für die Aluminiumbearbeitung, als auch für das Plasmaschneiden, insbesondere für die Stahlbearbeitung, eine geschlossene Bauart mit programmgesteuertem Bewegungsablauf der Bearbeitungseinheit erwünscht. Voraussetzung ist jedoch, daß die Notwendigkeit des Umspannens zwischen einzelnen Bearbeitungsschritten entfällt und daß die Aufspanneinrichtung nur für das Einlegen und Herausnehmen des Hohlprofils zugänglich ist.

Bei einer bekannten Vorrichtung der eingangs genannten Gattung (US-A- 3 918 145) erfolgt die Zuführung der zu bearbeitenden Hohprofile in Profillängsrichtung. Der Bearbeitungsbereich ist dabei von außen nicht oder nur schwer zugänglich.

Aufgabe der Erfindung ist es daher, eine Vorrichtung der eingangs genannten Gattung zu schaffen, die bei verhältnismäßig einfachem Aufbau und stabiler Aufspannmöglichkeit für das Hohlprofil eine gute Zugänglichkeit des Bearbeitungsbereichs gewährleistet.

Diese Aufgabe wird mit den kennzeichnenden Merkmalen des Anspruchs 1 gelöst.

Der konstruktive Aufbau der Aufspanneinrichtung aus zwei miteinander starr verbundenen Stirnscheiben ermöglicht eine besonders einfache und leichte Bauweise, die aber gleichwohl eine stabile und sichere Aufspannung des Hohlprofils gewährleistet. Besonders vorteilhaft ist, daß das zu bearbeitende Hohlprofil in dem Bereich zwischen den beiden Stirnscheiben für die Bearbeitungseinheit weitestgehend frei zugänglich ist, so daß in allen Schwenkstellungen alle erforderlichen Seitenflächen bearbeitet werden können.

Eine hinsichtlich des Bauaufwandes und der Arbeitsweise besonders günstige Ausführung des Schwenkantriebs besteht darin, daß der Schwenkantrieb zwei im Abstand zueinander am Maschinengestell gelagerte und im Abstand zur Schwenkachse an der Aufspanneinrichtung angreifende druckmittelbetätigte Schwenkzylinder aufweist. Durch geeignete Ansteuerung dieser beiden Schwenkzylinder wird die Aufspanneinrichtung in die jeweils gewünschte Schwenkstellung gebracht und gehalten. Diese Ausführung wird vorzugsweise gewählt, wenn nur drei Seiten eines im wesentlichen rechteckigen Hohlprofils bearbeitet werden müssen, d.h. wenn eine Schwenkung um höchstens 180° gefordert wird.

Wenn alle vier Seiten eines Hohlprofils bearbeitet werden müssen, d.h. wenn eine Schwenkung um 270° erforderlich ist, wird bevorzugt ein Schwenkantrieb verwendet, der einen an der Aufspanneinrichtung konzentrisch zur Schwenkachse angebrachten Zahnkranz aufweist, der mit einem am Maschinengestell gelagerten Antriebsritzel in Eingriff steht.

Weitere vorteilhafte Ausgestaltungen des Erfindungsgedankens sind Gegenstand weiterer Unteransprüche.

Die Erfindung wird nachfolgend an Ausführungsbeispielen näher erläutert, die in der Zeichnung dargestellt sind. Es zeigt:
- Fig. 1: eine Stirnansicht einer Vorrichtung zur mehrseitigen Bearbeitung von Hohlprofilen in einer ersten Schwenkstellung der Aufspanneinrichtung,
- Fig. 2: eine Draufsicht auf die Vorrichtung nach Fig. 1,
- Fig. 3 und 4: zwei weitere Schwenkstellungen bzw. Bearbeitungsstellungen, jeweils in einer Stirnansicht ähnlich der Fig. 1,
- Fig. 5: eine Stirnansicht einer abgewandelten Ausführungsform einer Vorrichtung zur mehrseitigen Bearbeitung von Hohlprofilen und
- Fig. 6: eine Draufsicht auf die Vorrichtung nach Fig. 5.

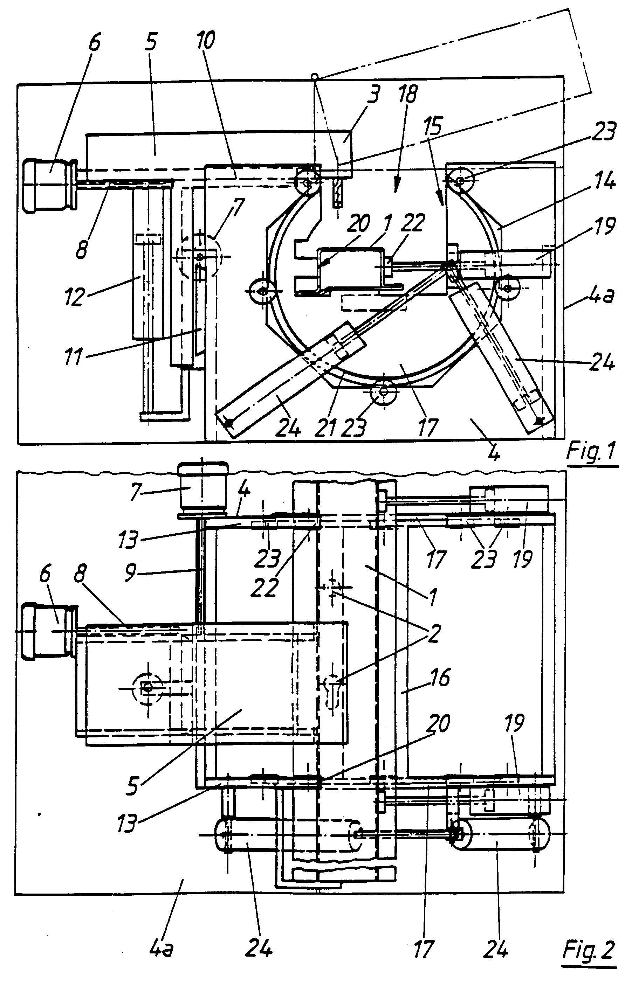

Die in den Figuren 1 bis 4 gezeigte Vorrichtung dient zur Bearbeitung eines Hohlprofils 1, beispielsweise für die Herstellung von Tür- oder Fensterrahmen. Dabei sollen in drei jeweils im rechten Winkel zueinander liegende Seitenflächen des Hohlprofils 1, das beispielsweise aus Aluminium besteht, Durchbrüche 2 gefräst werden. Hierzu ist als Bearbeitungseinheit 3 ein Fräskopf mit senkrechter Fräserachse vorgesehen.

Die Vorrichtung weist ein Maschinengestell 4 auf, an dessen Oberseite ein Schlitten 5 in drei Achsen verfahrbar ist, der die Bearbeitungseinheit 3 trägt.

Die Längen- und Breitenverstellung des Schlittens 5 erfolgt durch eine (nicht dargestellte) Zwei-Achsen-CNC-Steuerung, die zwei Motoren 6 und 7 steuert. Die Motoren 6 und 7 treiben jeweils eine Gewindespindel 8 bzw. 9 an, mit denen der Schlitten 5 am Maschinengestell 4 in Führungen 10 bzw. 11 verfahren wird.

Zur Einsparung einer dritten gesteuerten Achse erfolgt die Höhenverstellung des Schlittens 5 bei dem dargestellten Ausführungsbeispiel durch einen senkrechten Luftzylinder 12.

Das Maschinengestell 4 weist im Abstand zueinander zwei miteinander starr verbundene Wangen 13 auf, in denen jeweils eine zentrale Ausnehmung 14 vorgesehen ist, die zur Oberseite des Maschinengestells 4 hin geöffnet ist.

Die Ausnehmungen 14 dienen zur schwenkbaren Aufnahme einer Aufspanneinrichtung 15, in der das zu bearbeitende Kohlprofil 1 eingespannt werden kann. Die Aufspanneinrichtung 15 weist zwei im Abstand zueinander angeordnete und starr miteinander durch einen Steg 16 verbundene Stirnscheiben 17 auf. Jede Stirnscheibe 17 liegt angenähert in der Ebene der zugeordneten Wange 13 des Maschinengestells 4 in der jeweiligen Ausnehmung 14 dieser Wange 4.

Jede Stirnscheibe 17 hat eine sich angenähert bis zur Scheibenmitte erstreckende Aussparung 18 zur Aufnahme des Hohlprofils 1. Das Hohlprofil 1 wird durch zwei druckmittelbetätigte, vorzugsweise luftbetätigte Spannzylinder 19, die jeweils an der zugeordneten Stirnscheibe 17 angeordnet ist, gegen eine gegenüberliegende Anlagefläche 20 der Stirnscheibe 17 gespannt.

Jede der beiden Stirnscheiben 17 bildet an ihrem Umfang eine sich über einen Bogenwinkel von etwas mehr als 270° erstreckende Kreisbogenführung 21, die konzentrisch zu einer horizontalen Schwenkachse 22 der Aufspanneinrichtung verläuft. Diese Schwenkachse 22 erstreckt sich parallel zur Längsachse des zu bearbeitenden Hohlprofils 1.

Wie in den Fig. 1 und 2 dargestellt ist, sind die beiden Stirnscheiben 17 mit ihrer Kreisbogenführung 21 in mehreren am Umfang der Stirnscheibe 17 verteilten, am Maschinengestell 4 angebrachten Lagerrollen 23 gelagert.

Beim Ausführungsbeispiel nach den Fig. 1 bis 4 weist der Schwenkantrieb für die Aufspanneinrichtung 15 zwei druckmittelbetätigte Schwenkzylinder 24 auf, die im Abstand zueinander an der Außenseite der einen Wange 4 gelagert sind. Die Kolbenstangen der beiden Schwenkzylinder 24 greifen im Abstand zur Schwenkachse 22 an der einen Stirnscheibe 17 der Aufspanneinrichtung 15 an.

Durch gesteuerte Betätigung der beiden Schwenkzylinder 24 kann die Aufspanneinrichtung 15 nacheinander in die drei Schwenkstellungen gebracht werden, die in den Fig. 1, 3 und 4 dargestellt sind. Fig. 1 zeigt die Ausgangsstellung, in der die Ausnehmung 18 der Stirnscheiben 17 von oben zugänglich ist zur Aufnahme des Hohlprofils 1. Da auch die Ausnehmung 14 des Maschinengestells 4 nach oben geöffnet ist, wird auf diese Weise ein radialer Zugang zum Einlegen des Hohlprofils 1 geschaffen. Damit entfällt die Notwendigkeit, das Hohlprofil 1 in Längsrichtung einzuschieben, wodurch bei einem oberflächenbehandelten Hohlprofil 1 Beschädigungen verursacht werden könnten. In dieser in Fig. 1 gezeigten Schwenkstellung kann die obere Seitenwand des Hohlprofils 1 bearbeitet werden.

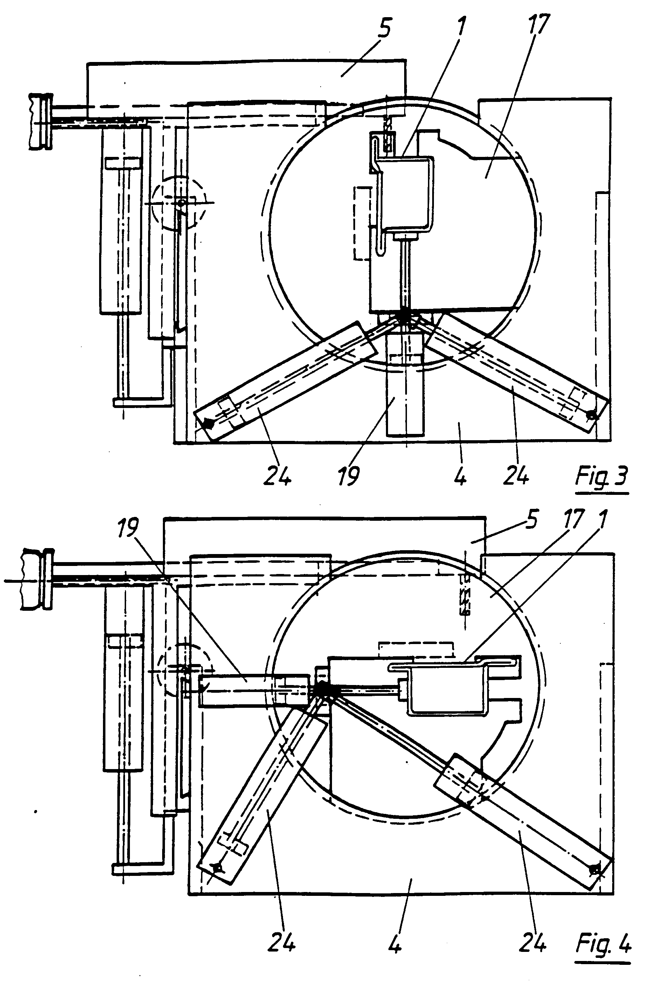

Das Maschinengestell 4 weist einen die gesamte Maschine, mindestens aber die Aufspanneinrichtung 15 umschließenden, weitgehend geschlossenen Kasten 4a mit einer aufklappbaren Haube 4b auf. Nach dem Einlegen des Hohlprofils 1 wird die Haube 4b geschlossen. Mittels des Luftzylinders 12 wird die Bearbeitungseinheit 3 nach unten verfahren; der Fräser taucht in das Hohlprofil 1 ein und führt die Bearbeitung durch, wobei die CNC-gesteuerten Motoren 6 und 7 die Bearbeitungseinheit 3 so verfahren, daß das einprogrammierte Fräsbild abgefahren wird. Anschließend wird die Bearbeitungseinheit 3 mittels des Luftzylinders 12 hochgefahren und die Aufspanneinrichtung 15 wird um 90° in die in Fig. 3 gezeigte Schwenkstellung geschwenkt. Daraufhin erfolgt die Bearbeitung der zweiten Seitenfläche des Hohlprofils 1.

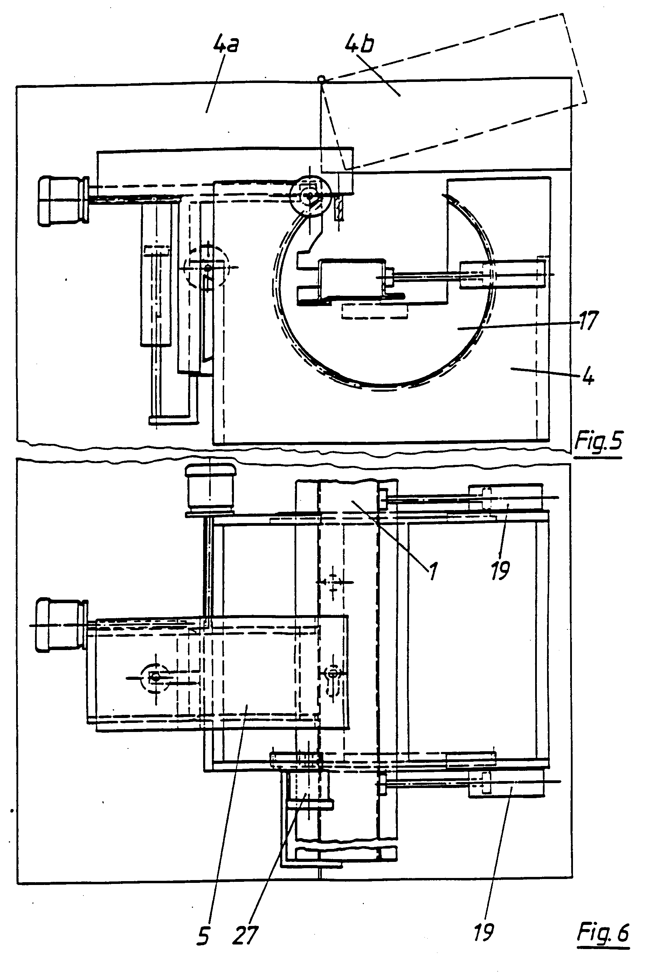

In der dritten, in Fig. 4 gezeigten Schwenkstellung wird die dritte Seitenwand des Hohlprofils 1 in der schon beschriebenen Weise bearbeitet. Anschließend wird die Aufspanneinrichtung 15 wieder in die in Fig. 1 gezeigte Ausgangsstellung zurückgeschwenkt. Nach dem Lösen der Spannzylinder 19 und dem Öffnen der Haube 4b kann das bearbeitete Hohlprofil 1 herausgenommen werden.

Das in den Fig. 5 und 6 dargestellte Ausführungsbeispiel unterscheidet sich von vom vorher beschriebenen Ausführungsbeipiel im wesentlichen nur dadurch, daß der Schwenkantrieb für die Aufspanneinrichtung 15 einen konzentrisch zur Schwenkachse 22 an einer der beiden Stirnscheiben 17 angebrachten Zahnkranz 25 aufweist, der mit einem am Maschinengestell 4 gelagerten Antriebsritzel 26 in Eingriff steht, das durch einen Schwenkmotor 27 angetrieben wird. Da sich der Zahnkranz 25 über einen Bogenwinkel von mehr als 270° erstreckt, ermöglicht diese Ausführung des Schwenkantriebs eine Schwenkung der Aufspanneinrichtung 15 um 270° um die Schwenkachse 22, so daß alle vier Seitenflächen des Hohlprofils 1 in die Bearbeitungsstellung geschwenkt werden können.

Anstelle des in der Zeichnung dargestellten Fräskopfs als Beispiel für die Bearbeitungseinheit 3 kann auch ein Plasmaschneidkopf mit nach unten gerichteter Plasmaschneiddüse vorgesehen werden. Diese Ausführung wird bevorzugt verwendet, wenn das zu bearbeitende Hohlprofil 1 aus Kunststoff besteht.

## Patentansprüche

1. Vorrichtung zur mehrseitigen Bearbeitung von Hohlprofilen (1) mittels einer an einem Maschinengestell (4) mehrachsig programmgesteuert verfahrbaren Barbeitungseinheit (3), mit einer im Maschinengestell (4) gelagerten Aufspanneinrichtung (15) für das zu bearbeitende Hohlprofil (1), wobei die Aufspanneinrichtung (15) im Maschinengestell (4) um eine parallel zur Längsachse des Hohlprofils (1) verlaufende Schwenkachse (22) um mindestens 180°schwenkbar gelagert und mit einem Schwenkantrieb (24 bzw. 26) versehen ist, dadurch gekennzeichnet, daß die Aufspanneinrichtung (15) zwei im Abstand zueinander angeordnete, starr miteinander verbundene Stirnscheiben (17) aufweist, daß jede Stirnscheibe (17) eine sich mindestens bis zur Scheibenmitte erstreckende Aussparung (18) zur Aufnahme des Hohlprofils (1) aufweist, daß jede Stirnscheibe (17) an ihrem Umfang eine sich über einen Bogenwinkel von mindestens angenähert 270° erstreckende, konzentrisch zur Schwenkachse (22) verlaufende Kreisbogenführung (21) bildet, mit der die Stirnscheibe (17) im Maschinengestell (4) gelagert ist, und daß das Maschinengestell (4) an einer Seite geöffnet ist und einen radialen Zugang zur schwenkbaren Aufspanneinrichtung (15) bietet.

2. Vorrichtung nach Anspruch 1, dadurch gekennzeichnet, daß das Maschinengestell (4) einen mindestens die Aufspanneinrichtung (15) umschließenden, weitgehend geschlossenen Kasten (4a) mit einer aufklappbaren Haube (4b) aufweist.

3. Vorrichtung nach Anspruch 1, dadurch gekennzeichnet, daß der Schwenkantrieb zwei im Abstand zueinander am Maschinengestell (4) gelagerte und im Abstand zur Schwenkachse (22) an der Aufspanneinrichtung (15) angreifende druckmittelbetätigte Schwenkzylinder (24) aufweist.

4. Vorrichtung nach Anspruch 3, dadurch gekennzeichnet, daß die beiden Schwenkzylinder (24) an der Außenseite einer der beiden Stirnscheiben (17) angeordnet sind.

5. Vorrichtung nach Anspruch 1, dadurch gekennzeichnet, daß der Schwenkantrieb einen an der Aufspanneinrichtung (15) konzentrisch zur Schwenkachse (22) angebrachten Zahnkranz (25) aufweist, der mit einem am Maschinengestell (4) gelagerten Antriebsritzel (26) in Eingriff steht.

6. Vorrichtung nach Anspruch 1, dadurch gekennzeichnet, daß die beiden Stirnscheiben (17) jeweils in mehreren am Umfang der Stirnscheibe (17) verteilten Lagerrollen (23) gelagert sind.

7. Vorrichtung nach Anspruch 1, dadurch gekennzeichnet, daß das Maschinengestell (4) jeweils angenähert in der Ebene jeder Stirnscheibe (17) eine Wange (13) aufweist, die die Stirnscheibe (17) in einer zentralen Ausnehmung (14) aufnimmt, die zur Oberseite des Maschinengestells (4) hin geöffnet ist.

8. Vorrichtung nach Anspruch 3, dadurch gekennzeichnet, daß an jeder Stirnscheibe (17) ein druckmittelbetätigter Spannzylinder (19) angeordnet ist, der das Hohlprofil (1) gegen eine gegenüberliegende Anlagefläche (20) spannt.

## Claims

1. Device for the multilateral machining of hollow profiles (1) using a machining unit (3) which is multi-axis, program-controlled and traversable on a machine frame (4) having a clamping device (15) mounted in the machine frame (4) for the hollow profile (1) undergoing machining, where the clamping device (15) can be pivoted by at least 180° in the machine frame (4) around a swivelling axis (22) running parallel to the longitudinal axis of the hollow profile (1), and which has a swivel drive (24 or 26), characterised in that the clamping device (15) has two face plates (17) arranged at a distance apart and rigidly connected to one another and that each face plate (17) has a recess (18) extending at least to the centre of the plate to accommodate the hollow profile (1), that each face plate (17) forms around its circumference, a circular arc guide (21) that extends over an angle of at least approximately 270° and runs concentrically with the swivel axis (22), by which the face plate (17) is supported in the machine frame (4) and that the machine frame (4) is open on one side and provides radial access to the slewable clamping device (15).

2. Device according to claim 1, characterised in that the machine frame (4) has a largely enclosed box (4a) enclosing at least the clamping device (15), having a hinged hood (4b).

3. Device according to claim 1, characterised in that the swivel drive has two pressure-medium operated swivel cylinders (24) supported at a distance apart from each other on the machine frame (4) and at a distance from the swivel axis (22) and is engaged at the clamping device (15).

4. Device according to claim 3, characterised in that the two swivel cylinders (24) are located on the outside of one of the two face plates (17).

5. Device according to claim 1, characterised in that the swivel drive has a toothed rim (25) fitted to the clamping device (15) concentric with the swivel axis (22), said toothed rim engaging with a drive pinion (26) supported by the machine frame (4).

6. Device according to claim 1, characterised in that the two face plates (17) are supported in several bearing rollers (23) distributed around the circumference of the face plate (17).

7. Device according to claim 1, characterised in that the machine frame (4) has a cheek (13) roughly in the plane of each face plate (17), said cheek accommodating the face plate (17) in a central recess (14) , which is open at the top of the machine frame (4).

8. Device according to claim 3, characterised in that on each face plate (17), is located a pressure-medium operated clamping cylinder (17), which clamps the hollow profile (1) against an opposing contact surface (20).

## Revendications

1. Dispositif d'usinage sur plusieurs côtés de profilés creux (1) au moyen d'une unité d'usinage (3) qui peut être déplacée sur un bâti de machine (4) sur plusieurs axes par commande d'un programme, comportant un dispositif de serrage (15), monté sur le bâti de machine (4), pour le profilé creux (1) à usiner, le dispositif de serrage (15) étant monté dans le bâti de machine (4) de manière à pouvoir pivoter d'au moins 180° sur un pivot (22) s'étendant parallèlement à l'axe longitudinal du profilé creux (1) et étant pourvu d'une commande de pivotement (24 ou 26), caractérisé en ce que le dispositif de serrage (15) présente deux plateaux de front (17) agencés à distance l'un de l'autre et raccordés de manière rigide l'un à l'autre, en ce que chaque plateau de front (17) présente uns échancrure (18) s'étendant au moins jusqu'au centre du plateau pour recevoir le profilé creux (1), en ce que chaque plateau de front (17) forme, sur sa périphérie, une glissière en arc de cercle (21) s'étendant sur un arc de cercle d'au moins 270° environ, concentriquement vis-à-vis du pivot (22), glissière par laquelle le plateau de front (17) est monté dans le bâti de machine (4), et en ce que le bâti de machine (4) est ouvert sur un côté et offre un accès radial au dispositif de serrage pivotant (15).

2. Dispositif selon la revendication 1, caractérisé en ce que la bâti de machine (4) présente un caisson (4a) largement fermé entourant au moins le dispositif de serrage (15) et pourvu d'un capot rabattable (4b).

3. Dispositif selon la revendication 1, caractérisé en ce que la commande de pivotement présente deux cylindres de pivotement (24) commandés par un agent de pression, montés à distance l'un de l'autre sur le bâti de machine (4) et s'accrochant au dispositif de serrage (15) à distance du pivot (22).

4. Dispositif selon la revendication 3, caractérisé en ce que les deux cylindres de pivotement (24) sont agencés sur la face extérieure d'un des deux plateaux de front (17).

5. Dispositif selon la revendication 1, caractérisé en ce que la commande de pivotement présente une couronne dentée (25) agencée sur le dispositif de serrage (15) concentriquement au pivot (22), qui s'engrène sur un pignon d'attaque (26) monté sur le bâti de machine (4).

6. Dispositif selon la revendication 1, caractérisé en ce eue les deux plateaux de front (17) sont montés respectivement dans plusieurs roulements de paliers (23) distribués sur la périphérie du plateau de front (17).

7. Dispositif selon la revendication 1, caractérisé en ce que le bâti de machine (4) présente respectivement, approximativement dans le plan de chaque plateau de front (17), un flasque (13) qui reçoit le plateau de front (17) dans une échancrure centrale (14), qui est ouverte vers la partie supérieure du bâti de machine (4).

8. Dispositif selon la revendication 3, caractérisé en ce que, sur chaque plateau de front (17), est agencé un cylindre de serrage (19) commandé par un agent de pression, qui serre le profilé creux (1) contre une surface d'appui en regard (20).
